# EUROPEAN PATENT APPLICATION

(11) **EP 4 438 654 A1**
(43) Date of publication of application: **02.10.2024**
(21) Application number: 24161330.6
(22) Date of filing: 05.03.2024
(51) Int. Cl.: C08G 69/26, B29C 64/153, B33Y 70/00, B33Y 70/10

(54) **MATERIALS FOR POWDER BED FUSION TECHNOLOGIES AND USING SUCH MATERIALS IN A LAYER-BY-LAYER PROCESS**

(30) Priority: 29.03.2023 EP 23165087
(71) Applicant: EMS-CHEMIE AG, 7013 Domat/Ems (CH)
(72) Inventor: WERNER, Daniel, 7012 Felsberg (CH); JENDE, Lars, 7013 Domat/Ems (CH); STEHLE, Christian, 7026 Maladers (CH)
(74) Representative: Bremi, Tobias Hans

(57) **Abstract**

Use of a powder in a in a layer-by-layer process in which areas of a powdered layer are selectively melted, sintered, fused, or solidified, preferably by focused or non-focused input of electromagnetic energy, wherein the powder comprises or consists of a thermoplastic polyamide powder comprising aliphatic dicarboxylic acid building blocks with 16-22 carbon atoms.

## Description

### TECHNICAL FIELD

The present invention relates to powder materials for use in powder bed fusion (PBF) technologies such as selective laser sintering (SLS), as well as to methods for the manufacture of such materials, selective PBF processes such as laser sintering processes using such materials and articles prepared using these materials in an SLS process.

### PRIOR ART

Powder bed fusion (PBF) technologies is an additive manufacturing process to produce spatial structures by sintering with a laser from a powdered starting material. In this process, unconsolidated loose powder is presented in a container, and the work piece is successively built up layer by layer by selective irradiation from above with a laser, which irradiates only the areas to be solidified and causes this solidification by melting the material. After irradiation of a layer and its liquefaction and/or solidification, a subsequent layer of powdered starting material is laid out over it and in the next step the desired area in this next layer is melted and, if necessary, solidified and at the same time fused to the underlying molten or already solidified layer.

Specifically, to prepare the moulded part, the polymer powder is applied in a thin layer to a lowerable plate of a sintering chamber, which is normally heated to a temperature slightly below the melting point of the polymer. The layer thickness is chosen in such a way that a melting layer is formed during or after the subsequent laser sintering. The laser sinters the powder particles according to the specifications of the controlling computer. After that, the plate is lowered by the amount of the layer thickness, usually 0.05 to 2.0 mm. With the application of a new powder layer, the process is repeated. After the completion of a preselected number of cycles according to the intended number of layers, a block has been formed, which externally consists of powder. Inside, it houses a highly viscous melt or an already largely solidified block in the shape of the desired moulded part. Non-melted areas where the powder is still in solid form stabilize the shape of the melt. After that, the block, consisting of powder shell and melt, is slowly cooled, and the melt solidifies when it falls below the solidification temperature of the polymer. It is advantageous if the block is kept at the solidification temperature until the phase transformation is completed. This is achieved by selecting a low cooling rate in the temperature range of the phase transformation, so that the released heat of solidification keeps the moulded body inside at exactly at the solidification temperature until the phase transformation is completed. After cooling, the block is removed from the sintering chamber and the moulding body is separated from the unsolidified polymer powder. The powder can be used again for the process.

As described in DE 197 47 309 commonly used polymer powders for such processes include polyamide 11 (PA 11) or polyamide 12 (PA 12), polyamide 6 (PA 6), but also polyacetals, polypropylene (PP), polyethylene (PE) and ionomers. Polycarbonates (PC) and polystyrene (PS) have also been used.

EP-A-1 720 930 describes a copolymer powder, and the use of this powder for non-focused moulding processes as well as mouldings made from such a polymer powder. The forming processes are layer-by-layer processes that use powders, whereby selectively areas of the respective layer are melted by non-focused introduction of electromagnetic energy. Selectivity can be achieved by masks, by applying inhibitors, absorbers, susceptors. Systems of the construction PA 6/12/66 are effectively worked and an MVR value in the range of 1-12 g/min is prescribed.

EP-A-2 274 363 relates to a method for reducing the crystallization temperature and the melting temperature of a polyamide powder resulting from the polymerization of at least one major monomer, wherein the at least one minority comonomer is selected from aminocarboxylic acids, diamine-diacid pairs, lactams and/or lactones, and wherein the at least one smaller co-monomer 0.1 to 20 % by mass of the total mixture of the monomer (s) and co-monomer (s), preferably 0.5, represents to 15 mass% of the total mixture. Systems of the type PA 12/6 are used, whereby the proportion of caprolactam must not exceed 20 %.

WO-A-2011124278 relates to a polymer powder for use in a layer-by-layer process in which areas of each powder layer are selectively fused by introducing electromagnetic energy. The polymer powder contains: at least one polyamide of the AB type, prepared by polymerization of lactams having 10 to 12 carbon atoms in the monomer unit or polycondensation of the corresponding aminocarboxylic acids having 10 to 12 carbon atoms in the monomer unit and at least one AABB type polyamide prepared by polycondensation of diamines and dicarboxylic acids, each of which comprises 10 to 14 carbon atoms in the monomer units. The disclosure also relates to a process for preparing such a powder, a layer-by-layer process for producing a moulding body from such a powder in which areas of each layer are selectively melted by introducing electromagnetic energy, wherein selectivity is obtained using masks or by applying inhibitors, absorbers or susceptors or focusing the applied energy, and thus prepared mouldings.

WO-A-2015009790 describes a part material for printing three-dimensional parts using an additive manufacturing system based on electrophotography, where the part material contains a composition with a semi-crystalline thermoplastic material and a charge control agent. The part material is provided in powder form with a controlled particle size and is configured for use in the electrophotography-based additive manufacturing system with a layer transfusion arrangement for printing the three-dimensional parts layer by layer. Although different materials for the powder used are mentioned, concrete systems are not worked.

WO-A-2020064825 relates to a sintered powder comprising a first polyamide component and a second polyamide component, wherein the melting point of the second polyamide component is higher than the melting point of the first polyamide component. The disclosure further relates to a method for preparing a moulding by sintering the sintered powder or by an FFF process (fused filament fabrication) and a moulding obtainable by the method. The disclosure further relates to a process for preparing the sintered powder. Mixtures of aliphatic polyamides with semi-aromatic polyamides are used, whereby polyamide 6 and polyamide 66 are used as aliphatic polyamides.

CN-A-107337793 introduces a copolymerized nylon powder material used for selective laser sintering and a process for its manufacture. The method includes the following steps: performing a copolymerization reaction on a short-chain nylon raw material and a long-chain nylon raw material using a copolymerization reaction principle to obtain copolymerized nylon resin, performing a cryogenic crushing, drying and sieving of the copolymerized nylon resin, and adding a flow aid and an antioxidant to obtain the copolymerized nylon powder material selective laser sintering is used. Systems based on polyamide 1010 as well as polyamide 1212 and polyamide 66 or PA6 in the form of PA6/1010, PA66/1010, PA 6/1212, PA 66/12, are used.

CN-A-104830053 relates to the field of high-molecular materials and aims to solve a problem of a high industrial cost of nylon 12 in the field of 3D printing. It discloses a caprolactam-laurolactam co-polymer modified by glass fibers and a preparation method of a powder thereof, wherein the relative mechanical performances of the obtained polymer are described. The co-polymer powder is good in the performances such as thermodynamic properties and size stability, is low in production cost and usage cost, is uniform in particle size and can be used for partially replacing, especially in the field of 3D printing, the nylon 12 at a certain degree. Specific systems disclosed are only PA 6/12 systems, so systems based on caprolactam and laurolactam with glass fibres.

WO-A-2005082979 discloses a polymer powder comprising a copolymer, to the use of such a powder in a shaping method and to moulded bodies that are produced from such a polymer powder. The shaping methods are methods that operate layer by layer using a powder and during said methods areas of each layer are fused by the focussed application of electromagnetic energy. Once cooled, the solidified moulded bodies can be removed from the powder bed. The component characteristics of the moulded bodies that have been produced using the inventive powder according to the method, can be varied within a range, depending on their composition in comparison to moulded bodies produced from conventional powders. Specific systems disclosed are systems including PA 6/12/612, PA 6/12/612, PA 12/66, PA 6/IPDA12, as well as polyester systems based on terephthalic acid, wherein IPDA is isophorone diamine.

US-B-8097333 discloses pre-impregnated composite material (prepreg) that can be cured to form composite parts that have high levels of damage tolerance. The matrix resin includes a thermoplastic particle component that is a blend of particles that have a melting point above the curing temperature and particles that have a melting point at or below the curing temperature. Specific systems disclosed are PA 6/12 systems, so systems based on caprolactam and laurolactam.

WO-A-2005105891 relates to a polymer powder, comprising polyamide, use thereof in a moulding method and moulded body made from said polymer powder. The moulding method involves layering methods using powder, whereby selective regions of the relevant layer are fused by introduction of electromagnetic radiation. The selectivity can be achieved by means of masking, application of inhibitors, absorbers or sensitizers, or by focussing of the input energy. After cooling, the solidified regions can then be removed as a moulded body from the powder bed. Specific systems disclosed include PA 12, PA1010, PA1012, PA1212, PA612, PA 613.

WO-A-2016112283 also discloses powder compositions for laser sintering. Nylon copolymer compositions are described which allegedly provide enhanced performance in processing and finished products when used in 3D laser sintering processes. Specific systems disclosed include PA11, PA 12, PA 610/6T6I, PA 612/6T6I, PA6/69, PA6/6T6I.

WO-A-2007051691 discloses a process for producing ultrafine powders based on polyamides, in which polyamides having a relative solution viscosity in the range from 1.5 to 2.0, are brought into contact with an alcoholic medium in the presence of inorganic particles under super atmospheric pressure and/or elevated temperature to produce an at least partial solution and the polyamide is subsequently precipitated from the at least partial solution, characterized in that a suspension of the inorganic particles suspended in the alcoholic medium is used. The resulting ultrafine polyamide powders have a specific surface area determined by the BET method in the range 5-100 m²g, a fineness d50 of less than 70 µm; a bulk density BD in the range from 250 to 1000 g/l; and a particle content of from 0.1 to 80% by weight of inorganic particles based on the total weight of the polyamide powder. Specific systems disclosed include PA 12, PA1010, PA1012.

EP-A-2650106 discloses a polymer powder exhibiting a single melting point determined by differential scanning calorimetry, comprising polyamide of AABB type. Specific worked systems disclosed include PA1012, PA1010, PA1013, PA 613, PA1212.

WO-A-2009101320 relates to a powder of PA polyamide (homopolyamide or copolyamide) at least partially derived from renewable materials, in which the particles have a non-spherical shape and a median volume diameter lower than or equal to 20 µm. It also relates to a method for preparing such a powder. Specific worked systems disclosed include PA11 and PA12.

CN-A-107337792 provides a copolymerized nylon powder material having a controllable melting point, and a preparation method thereof. The method comprises the following steps: adding a first solvent, an aliphatic dibasic acid and an aliphatic diamine into a polymerization kettle, carrying out a reaction to generate a copolymerized nylon salt, adding a copolymerized nylon salt solution, a molecular weight regulator, deionized water and an antioxidant into a polymerization kettle, polymerizing the added substances to obtain copolymerized nylon granules, adding the copolymerized nylon granules and a second solvent into a polymerization kettle, carrying out solvent process pulverization obtain copolymerized nylon powder, and post-processing the copolymerized nylon powder to obtain the copolymerized nylon powder material which can be effectively applied to a selective laser sintering process. The copolymerized nylon salt is once obtained through controlling the ratio of two nylon salts in the copolymerized nylon from salt preparation, so the method has the advantages of effective control of the melting point of the copolymerized nylon, omission of the separating and drying processes of the salt, increase of the technologic stability, saving of the preparation time, saving of the preparation time, and increase of the stability of the performances of the copolymerized nylon material.

US-A-2012041132 discloses a molding, produced by a layer-by-layer process in which regions of respective polymer pulverulent layers are selectively melted via introduction of electromagnetic energy, where the process employs a powder which comprises at least one homopolyamide prepared via polycondensation of diamines and dicarboxylic acids, wherein the homopolyamide has an enthalpy of fusion of at least 125 J/g and a recrystallization temperature of at least 148° C.

US-A-2013274435 provides precipitated polymer powders based on a polyamide of the AABB type, obtained by the reprecipitation of the polyamides by at least partial dissolution followed by continuous cooling of the solution to below the precipitation temperature. The polyamides are prepared by polycondensation of diamines with dicarboxylic acids. The precipitated polyamides obtained are used in layer-by-layer shaping processes such as selective laser sintering.

WO-A-2021069851 relates to a polyamide powder for use in a process of powder agglomeration by sintering, comprising at least one chain limiting agent.

WO-A-2019195689 disclosed additive manufacturing compositions comprising: A) 5 to 94.9 weight percent of at least one semi-crystalline copolyamide having a melting point; wherein said semi-crystalline copolyamide comprises: a-1) 5 to 40 mole percent aromatic repeat units derived from: i) one or more aromatic dicarboxylic acids with 8 to 20 carbon atoms and an aliphatic diamine with 4 to 20 carbon atoms; and a-2) 60 to 95 mole percent aliphatic repeat units derived from: ii) an aliphatic dicarboxylic acid with 6 to 20 carbon atoms and an aliphatic diamine with 4 to 20 carbon atoms; B) 5 to 94.9 weight percent of at least one amorphous copolyamide comprising: b-1) 60 to 90 mole percent aromatic repeat units derived from: iii) isophthalic acid and an aliphatic diamine with 4 to 20 carbon atoms; and b-2) 10 to 40 mole percent aromatic repeat units derived from: iv) terephthalic acid and an aliphatic diamine with 4 to 20 carbon atoms; C) 0.1 to 50 weight percent of at least one aramid material; and D) 0 to 30 weight percent of at least one additive. These compositions provide 3D printed articles having improved physical properties.

### SUMMARY OF THE INVENTION

It is an object of the present invention to propose a powder for use in a powder bed fusion method, such as, for example, an SLS method of the type described above. The powder bed fusion method can comprise the use of a focused or non-focused input of electromagnetic energy, thermal energy, or other energy to selectively fuse, melt, sinter, or solidify a powder material in an additive manufacturing process. Preferably, the powder is for the production of articles/mouldings in a layer-by-layer process in which areas of a powdered layer are selectively melted using focused or non-focused input of electromagnetic energy. Possible are uses in SLS processes but also multi jet fusion (MJF), selected absorption fusion (SAF) or high speed sintering (HSS) processes.

A powder in accordance with the present invention is defined as a (at room temperature) solid substance reduced to a state of fine, loose particles for example by crushing, grinding, disintegration, precipitation or a combination thereof.

Specifically, a powder is to be provided that has at least one of the following advantageous properties:
- Good or increased mechanical performance
- Good or increased printability (less Cracks/Warpage/Curling and better Flowability)
- Good or increased recyclability for multiple prints
- possibility of dry mixing of colours within the material to print fully coloured parts where the colours do not bleed out
- stable mechanical properties before and after conditioning (23 °C, 50% humidity, 40 hours).
- possibility of subsequent colouring due to the stable mechanical properties even after conditioning
- Good or higher translucency
- Good or higher part smoothness (better sheer).

According to a first aspect of the present invention, it relates to the use of a powder comprising or consisting of a thermoplastic polyamide powder for the preparation of mouldings in a layered process in which selectively areas of a powdered layer are
(1) melted by input of electromagnetic energy (typically by a controlled laser),
(2) melted by input of thermal energy from a source other than electromagnetic energy, or
(3) otherwise melted, fused, sintered, or solidified to form an article or object.

Such a powder is characterized according to claim 1. The present invention relates to and claims the use of such a powder but also to the powder as such, with the further characteristics as detailed below.

According to the present invention, the powder comprises or consists of a thermoplastic polyamide powder comprising aliphatic dicarboxylic acid building blocks with 16-22 carbon atoms.

This includes the situation where the thermoplastic polyamide powder is one formed by a mixture of two or more different polyamides comprising aliphatic dicarboxylic acid building blocks with 16-22 carbon atoms.

In fact it was shown that if the thermoplastic polyamide powder being the basis of the powder comprises these long chain building blocks, the above-mentioned advantages surprisingly can be reached.

The powder for the layer-by-layer process in which areas of a powdered layer are selectively melted, sintered, fused, or solidified, preferably by focused or non-focused input of electromagnetic energy, either exclusively consists of the thermoplastic polyamide powder or it may comprise the thermoplastic polyamide powder in a mixture with different powder material. The proportion of the thermoplastic polyamide powder in such a mixture powder is typically at least 50% by weight relative to the total of the powder, preferably it is at least 60% by weight or in a proportion as also detailed further below. The powder material different from the thermoplastic polyamide can for example comprise or consist of powder particles of filler materials (organic or inorganic), flow aid materials, stabiliser materials (including heat stabilisation, optical stabilisation), colourants including pigments or dyes, or a combination thereof either in the form of individual particles or particles of a mixture of such materials. Preferably the particle sizes of such different powder particles are selected in the same or essentially the same range as defined further below for the powder particles of the thermoplastic polyamide powder.

The thermoplastic polyamide powder in that powder in itself may consist of a single thermoplastic polyamide or a mixture of different thermoplastic polyamides, or that thermoplastic polyamide powder may consist of particles made from a mixture of one or a plurality of thermoplastic polyamide types with further additives. Typically, the thermoplastic polyamide powder comprises at least 70% by weight of the thermoplastic polyamide powder comprising aliphatic dicarboxylic acid building blocks with 16-22 carbon atoms or a mixture of different thermoplastic polyamides comprising aliphatic dicarboxylic acid building blocks with 16-22 carbon atoms, relative to 100% of the total weight of the thermoplastic polyamide powder. Preferably the additives make up at most 20% by weight or at most 10% or at most 5% by weight relative to 100% of the total thermoplastic polyamide powder. According to one preferred embodiment, the thermoplastic polyamide powder consists exclusively of one or several thermoplastic polyamide systems comprising aliphatic dicarboxylic acid building blocks with 16-22 carbon atoms without any additives. Additives can be selected as detailed further below.

According to a first preferred embodiment, the aliphatic dicarboxylic acid building blocks with 16-22 carbon atoms are selected from the group of linear dicarboxylic acids with terminal carboxylic groups, preferably consisting of: hexadecanedioic acid, octadecanedioic acid, docosane-1,20-dicarboxylic acid, or a mixture thereof.

According to a particularly preferred embodiment, the aliphatic dicarboxylic acid building block with 16-22 carbon atoms is exclusively selected from only one of hexadecanedioic acid, octadecanedioic acid, or docosane-1,20-dicarboxylic acid.

According to yet another preferred embodiment, the thermoplastic polyamide powder comprises or consists of building blocks built from diamines and dicarboxylic acids, and the molar proportion of said aliphatic dicarboxylic acid building blocks with 16-22 carbon atoms relative to all dicarboxylic acids of the polyamide is at least 20%, or at least 40%, or at least 50%, preferably at least 60% or in the range of 65-100% or in the range of 85-100%.

Said diamines are preferably selected from the group consisting of linear or branched aliphatic, cycloaliphatic or aromatic diamines with 4-20 carbon atoms.

Linear aliphatic diamines are preferably selected from linear aliphatic diamines with 6-12 carbon atoms, preferably from the group of tetramethylenediamine, hexamethylenediamine, octamethylenediamine, nonamethylenediamine, decamethylenediamine or mixtures thereof.

Cycloaliphatic diamines are preferably selected from the group consisting of bis(4-amino-3-methylcyclohexyl)methane (MACM, CAS No. 6864-37-5), bis(4-aminocyclohexyl)methane (PACM, CAS No. 1761-71-3) or mixtures thereof.

Aromatic diamines are preferably selected from xylylenediamine, in particular p-xylylenediamine, m-xylylenediamine or mixtures thereof.

There may also be building blocks based on diamine and dicarboxylic acid which are not based on the above-mentioned aliphatic dicarboxylic acid building blocks with 16-22 carbon atoms, as pointed out above however, preferably with a lower proportion than the building blocks based on aliphatic dicarboxylic acid building blocks with 16-22 carbon atoms.

For these different building blocks, dicarboxylic acids different from said aliphatic dicarboxylic acid building blocks with 16-22 carbon atoms are preferably selected from the group of linear or branched aliphatic, cycloaliphatic or aromatic dicarboxylic acids with 4-20 carbon atoms, wherein preferably linear aliphatic dicarboxylic acids are selected from succinic acid, adipic acid, suberic acid, sebacic acid, dodecanoic acid or mixtures thereof, and wherein aromatic dicarboxylic acids are selected from the group consisting of terephthalic acid, isophthalic acid or mixtures thereof.

The thermoplastic polyamide powder preferably comprises or consists of building blocks built from diamines and said aliphatic dicarboxylic acid building blocks with 16-22 carbon atoms selected from the group consisting of PA 616, PA 618, PA 620, PA1016, PA 1018, PA 1020, PA1216, PA 1218, PA 1220, or mixtures thereof. According to a particularly preferred embodiment, the thermoplastic polyamide powder is free from lactam building blocks.

According to another preferred embodiment, the thermoplastic polyamide powder is based on a polyamide which further comprises lactam building blocks, wherein the lactam building blocks have 4-20 carbon atoms, preferably 6-12 carbon atoms. Preferably the molar proportion of the lactam building blocks relative to building blocks built from diamines and dicarboxylic acids, in this case is at most 50%, or at most 40%, or at most 30%.

According to another preferred embodiment, the thermoplastic polyamide powder is selected from the group consisting of PA 616, PA 1016, PA 1016/10I, PA 6/66/610/616, PA 620, PA 1020, or a mixture thereof. In each of these cases, where there is not only building blocks based on aliphatic dicarboxylic acid building blocks with 16-22 carbon atoms, the proportion of aliphatic dicarboxylic acid building blocks with 16-22 carbon atoms is preferably at least as defined above.

According to a particularly preferred embodiment, the powder consists of a thermoplastic polyamide powder or comprises only one single thermoplastic polyamide constituent, wherein this thermoplastic polyamide powder or thermoplastic polyamide constituent comprises at least one aliphatic dicarboxylic acid building block with 16 carbon atoms, preferably selected as hexadecanedioic acid.

Preferably this thermoplastic polyamide powder or thermoplastic polyamide constituent is built from diamine and dicarboxylic acid building blocks and lactams, wherein the molar proportion of lactams is less than 40mole-%, preferably less than 30 mole%, wherein the mole percentages are relative to the molar total of the lactams and half of the sum of the diamine and dicarboxylic acid moles. By way of example, the system can be given by 27 mole% caprolactam and 73 mole% hexadecanedioic acid and 73 mole% hexamethylene diamine.

According to one preferred embodiment, this thermoplastic polyamide powder or thermoplastic polyamide constituent does not comprise any lactam building blocks and only comprises one aliphatic diamine building block and hexadecanedioic acid as dicarboxylic acid building block. Preferably the diamine building block in this case has 6 or 10 carbon atoms.

According to another preferred embodiment, this thermoplastic polyamide powder or thermoplastic polyamide constituent does not comprise any lactam building blocks and only comprises one aliphatic diamine building block, preferably 1,6 hexamethylene diamine, and comprises at least 90 mol% hexadecanedioic acid as dicarboxylic acid building block, the remaining dicarboxylic acid preferably being selected from an aromatic dicarboxylic acid system, preferably isophthalic acid and/or terephthalic acid.

According to yet another preferred embodiment, this thermoplastic polyamide powder or thermoplastic polyamide constituent is built from at least 50 mol% hexadecanedioic acid and the remaining dicarboxylic acids being aliphatic dicarboxylic acids, preferably adipic acid and/or sebacic acid, and aliphatic diamine, preferably exclusively hexane diamine, and lactam, preferably caprolactam, wherein the lactam proportion is less than 40 mol%, wherein in each case the mole percentages are relative to the total of the lactams and half of the sum of the diamine and dicarboxylic acid moles.

Preferably, the thermoplastic polyamide powder has
a melting point, measured in accordance with ISO 11357-3, of greater than 160 °C, preferably in the range of 165-210 °C,
and/or has a glass transition temperature, measured preferably by dynamic mechanical analysis in accordance with ISO 6721-2:2008 of at least 25 °C.

According to yet another preferred embodiment, the powder which is used is free from any amorphous polyamide constituent. Preferably therefore, the powder which is used only comprises or even consists of semi-crystalline polyamide, preferably having a melting point as defined above.

According to yet another preferred embodiment, the powder which is used is free from any aramid material, wherein aramid materials are to be understood as being those prepared from polyamides wherein at least 85% of the amide (-CONH-) linkages are attached directly to two aromatic rings, which includes aromatic polyamides such as poly (p-phenylene terephthalamide), which is called PPD-T.

Preferably, the thermoplastic polyamide powder is a ground or participated polyamide powder, and wherein preferably in case of a ground powder it is prepared by a cryogrinding process.

Preferably, the thermoplastic polyamide powder has a relative viscosity, preferably measured in m-cresol at a temperature of 20 °C and a concentration of 0.5 wt .-% according to ISO 307, in the range of 1.5-2.1, preferably in the range of 1.6-2.0.

Preferably, the thermoplastic polyamide powder has a recrystallization temperature (T_{rc}) in the range of 70-180 °C, preferably in the range of 80-170 °C, or in the range of 80-160 °C, or in the range of 80-150 °C. More preferably, the thermoplastic polyamide powder has a recrystallization temperature (T_{rc}) less than 148 °C or less than 145 °C, or in the range of 70-147 °C, preferably in the range of 80-145 °C, or in the range of 80-145 °C, or in the range of 80-145 °C.

According to the present invention, the powder which is used is free from chain limiting agents as an additive separate from the polyamide powder. This means that the thermoplastic polyamide does not comprise any free chain limiting agents next to the actual polyamide polymer. If chain limiting agents are used, this is in the manufacturing process and chain limiting agents are added to the polyamide monomer starting materials at the beginning and before starting the polymerization process. Any such chain limiting agent will therefore have reacted with and be part of the actual polyamide polymer, and will not be present as a further additive next to the polyamide polymer. Specifically, no chain limiting agents as additives in the powder are present which are of the monoacid, of the dicarboxylic acid, of the monoamine order of the diamine type.

According to another preferred embodiment, also in the manufacturing process no chain limiting agent is used, so the polyamide polymer of the powder is also free from chain limiting agents as part of the polymer chain.

Preferably, the thermoplastic polyamide powder has a sinter window in the range of 5-90 °C, preferably in the range of 6-80 °C. The sinter window is defined as the window (Tₘ-T_{rc}) between the melting temperature Tₘ and the recrystallization temperature T_{rc}.

The thermoplastic polyamide powder and/or the powder as a whole preferably has a an average particle size D50, preferably measured according to ISO 13322-2, in the range of 50-80 µm, preferably in the range of 50-65 µm, more preferably in the range of 50-60 µm.

Preferably the particle size distribution is such that 80%, preferably 90%, of the particles are located within a range of sizes of 20-100 µm, preferably in the range of 40-90 µm. Preferably, the value of D10 measured according to ISO 13322-2 is in the range of 15-45 µm, preferably in the range of 20-30 µm, and/or the value of D95 measured according to ISO 13322-2 is in the range of 80-150 µm, preferably in the range of 85-98 µm.

Typically, the powder and/or the thermoplastic polyamide powder has a diameter D50 measured according to ISO 13322-2 of 50-80 µm, preferably 50-65 µm, more preferably 50-60 µm.

The powder particles preferably have essentially a slightly jaggered or irregularly shaped (e.g. sphericity far smaller than 1), spherical or potato shape.

The thermoplastic, ground polyamide powder further preferably has an MFR value, preferably measured according to ISO 1133, in the range of 6-17 g / 10min.

Typically, the thermoplastic polyamide powder is free from fillers.

Alternatively or additionally, the thermoplastic polyamide powder is free from flame retardant additives.

Alternatively or additionally, the thermoplastic polyamide powder does not comprise aromatic building blocks.

According to yet another preferred embodiment, the thermoplastic polyamide powder consists of the polyamide and further additives in an amount of not more than 20 weight% or 15 weight%, preferably in the range of 1-12 weight% or 5-10 weight%, relative to the total weight of the powder.

Preferably the additive is one or a combination of the following; fillers, preferably selected from the group of talc, aluminium oxide-based fillers, glass fillers, metal carbonates including calcium carbonate; flow agents, preferably selected from the group of fumed or precipitated silica, metal salts of long-chain fatty acids, including metal stearates, titanium dioxide, group 1 salts, fumed aluminium oxide; flame retardants, preferably selected from the group of organic or inorganic mono- or diphosphinates, preferably metal alkyl phosphinate, in particular aluminium diethyl phosphinate, alone or in combination with synergist compounds, preferably containing nitrogen and/or phosphorous, including melem, melam, melon or other melamine or derivatives thereof.

According to a further aspect of the present invention, this relates to a method for producing a thermoplastic polyamide powder for use in a process as described above. In one example, the method is characterized in particular in that by means of a suitable screening technology (tumble air jet screener, ultrasound tumbler or winnower) a grain size distribution suitable for the printing process is achieved. In other examples, the method may not use a screening technology.

More generally speaking, the present invention also relates to a method for preparing a thermoplastic polyamide powder as defined above, wherein the thermoplastic polyamide is subjected to a cryo-grinding process or a precipitation process and is preferably subsequently subjected to a particle size filtering (sieving) process, preferably for the generation of a particle size distribution such that the average particle size D50, preferably measured according to ISO 13322-2, is in the range of 50-80 µm, preferably in the range of 50-65 µm, more preferably in the range of 50-60 µm.

If needed for the preparation of the final powder the thermoplastic polyamide powder may be mixed with different powder particles as detailed further below. The above-mentioned particle size filtering may take place before mixing with the different powder particles or after or both.

Furthermore, in some examples, the method includes forming a thermoplastic polyamide powder using solvent precipitation, solvent pulverization, melt emulsification, melt pulverization, or another micronization technique, if needed after mixing with additives. In addition, in some embodiments, it is possible to prepare a composition for use in additive manufacturing by blending the polyamide powder with one or more additional components or additives, such as an additive or filler. Such a composition can be prepared, in some examples, by dry blending or wet blending.

According to a further aspect, the present invention describes (sinterable) powders for use in additive manufacturing, such as SLS or another additive manufacturing method in which a granular or particulate material is melted, fused, sintered, or otherwise solidified in a selective manner. In accordance with this invention, such a powder comprises as a component a thermoplastic polyamide powder as described herein. The thermoplastic polyamide powder may form all or part of the sinterable powder. In some cases, the thermoplastic polyamide powder is the primary or majority component of the sinterable powder composition. For instance, in some embodiments, a powder for additive manufacturing described herein comprises up to 100 wt. %, up to 99 wt. %, up to 95 wt. %, or up to 90 wt. % thermoplastic (co)polyamide powder, based on the total weight of the powder. In some instances, the powder comprises 50-100 wt. %, 50-99 wt. %, 50-90 wt. %, 50-80 wt. %, 50-70 wt. %, 60-100 wt. %, 60-99 wt. %, 60-90 wt. %, 70-100 wt. %, 70-99 wt. %, 70-90 wt. %, 80-100 wt. %, 80-99 wt. %, 80-95 wt. %, 85-100 wt. %, 85-99 wt. %, 85-95 wt. %, 90-100 wt. %, or 90-99 wt. % thermoplastic (co)polyamide powder, based on the total weight of the powder. In some cases, the powder further comprises another granular, particulate, or powder component, in addition to the thermoplastic (co)polyamide powder component.

In some embodiments, for example, a powder for additive manufacturing described herein comprises a flow aid component. So, in order to achieve increased flowability of said powder in the layer fusing process, slight amounts of flowagent, or a combination of flow agents may be used. Such flow agents are e.g.: Talc, Aluminium hydroxide or other Al based flow aids, Glass filled, CaCOs (or other metal carbonates). Aerosil (fumed or precipitated Silica), Sipernat variations, Mg Stearate (or other Stearates), TiO₂ (or other metal oxides), Group 1 salts, and metal based-long chain fatty acids.

Also possible is to have a coating on the thermoplastic polyamide powder particles with corresponding additives supporting the additive manufacturing process.

Further the invention relates to a method of printing a three-dimensional article comprising: providing a powder as detailed above; and selectively solidifying layers of the powder to form the article, preferably using focused or non-focused input of electromagnetic energy. Preferably the composition is provided in a layer-by-layer process.

More generally speaking, the present invention also relates to a method of printing a three-dimensional article comprising the steps:
providing a powder consisting of or comprising a thermoplastic polyamide powder as detailed above; and
selectively solidifying layers of the powder to form the article, preferably using focused or non-focused input of electromagnetic energy, wherein preferably the composition is provided in a layer-by-layer process,
wherein preferably the powder has a particle diameter D50 measured according to ISO 13322-2 of 50-80 µm, preferably 50-65 µm, more preferably 50-60 µm.

Furthermore, the present invention relates to a moulded body prepared using a method as described above, or a moulded body prepared from or formed from a powder described above.

Further embodiments of the invention are laid down in the dependent claims.

### DESCRIPTION OF PREFERRED EMBODIMENTS

Preferred embodiments of the invention are described below on the basis of the embodiments, which serve only as an explanation and are not to be interpreted restrictively. According to the invention, the condensation reaction as well as the grinding process and the use are explained.

### Step A1 - Copolyamide, General Procedure for Polymer Production, PA 616, E1:

Hexadecanedioic acid (28.46 kg, 100 mol%), hexane-1,6-diamine (11.58 kg, 100 mol%, added as a 60% water mixture), were transferred with water (3 kg), to an autoclave, where the mixture was stirred at 160-200 °C for 140 minutes. The mixture was then heated to 290 °C and 20 bar, and stirred under constant pressure of 20 bar for 5 hours at 290 °C. Over 2.5 hours, the polymer was cooled to 270 °C and the pressure was reduced to 0.3 bar. The temperature was subsequently reduced to 260 °C.

The polycondensate was then granulated and dried in a standard procedure.

Analytics: Melting point: 190.0 °C, Recrystallization temperature: 165 °C. Relative viscosity (0.5% in M-cresol): 1.90-2.00.

### Step A2 Copolyamide using Aromatic based components for example E3:

In a similar synthesis procedure as A.2. Only 95 mol% Hexadecanedioic acid was used and the remaining 5% mol was replaced by an aromatic based di-carboxylic acid (e.g. IPS, or TPS). The diamine ratio was unaltered and the Production procedure was the same as above. The polycondensate was then granulated and dried by standard procedure. Analytics: Melting point: 174 °C, Recrystallization temperature: 136 °C. Relative viscosity (0.5% in M-cresol): 1.62 - 1.66.

### Step A3 - Copolyamide, General Procedure for Lactam inclusive Polymer Production, PA6/66/610/616 for example E4 and E5:

Hexadecanedioic acid (43.53 kg, 51 mol%), Adipic acid (3.05 kg, 7 mol%), Sebacic acid (9.04 kg, 15 mol%), Hexane-1,6-diamine (60% in water, 42.13 kg, 73 mol%) and Caprolactam (9.11 kg, 27 mol%) were transferred with water (3 kg), to an autoclave, where the mixture was stirred at 160-200 °C for 140 minutes. The mixture was then heated to 290 °C and 20 bar, and stirred under constant pressure of 20 bar for 5 hours at 290 °C. Over 2.5 hours, the polymer was cooled to 270 °C and the pressure was reduced to 0.3 bar. The temperature was subsequently reduced to 260 °C.

The polycondensate was then granulated and dried in a standard procedure.

Analytics: Melting point: 173.2 °C, Recrystallization temperature: 115.7 °C. Relative viscosity (0.5% in M-cresol): 1.70-1.72

### Step A4 Copolyamide generation using Docosane-1,20-dicarboxylic acid:

Docosane-1,20-dicarboxylic acid (100 mol%) and a di-amine (either hexane-1,6-diamine, or decane-1,10-diamine in 100 mol%), were combined and heated to 260 °C in an inert atmosphere. After 6 hours, the material was cooled leaving a clear white solid of PA620 and PA1020, respectively.

The polycondensate was then granulated and dried in a standard procedure.

Analytics:
PA620: Melting point: 188.9 °C, Recrystallization temperature: 139.4 °C.
PA1020: Melting point: 169.3 °C, Recrystallization temperature: 108.7 °C.

### Step B1 - Powder produced by milling:

The granules obtained from step A were ground with the addition of liquid nitrogen in the counter run with a pin mill of the type Hosokawa 160C at -50 °C, to the raw ground material. Subsequently, the raw ground material was separated with an ultrasonic sieve to the grain size distribution of approximately 40-90 µm, using screen fabrics of according mesh size. Analytics: Measured grain size distribution (µm): D10: 30.9, D50: 56.0 D95: 85.7, as determined on Camsizer XT according to ISO 13322-2.

### Step B2 - Powder produced by precipitation:

The granules obtained from step A were dissolved in a sealed vessel at elevated temperatures of 130-150 °C in a ethanol/butanone (250:1) with constant stirring. After the granules were completely dissolved, the temperature of the mixture was slowly decreased to reach between 100 °C and 120 °C together with the speed of stirring. After this slow cool/down method, followed by filtration and vacuum drying, fine white particles were obtained.

Analytics: Measured grain size distribution (µm): D10: 40.0, D50: 76.9 D95: 149.8, as determined on Camsizer XT according to ISO 13322-2.

For the Powder from Step B2: melting point: 174.8 °C, Recrystallization temperature: 135.6 °C.

### Step C: SLS Moldings:

The powder obtained from step B was printed for the production of test bodies (ISO 527) using an SLS printer SPro60 from 3D Systems (equipped with a CO2 Laser).

The printer was set with the parameters given in the **Table 1** below for the examples E1-E7 according to the invention and for the comparative examples CE1-CE3. **Table 2** summarizes the mechanical properties.

**Table 1: Monomer basis, thermal properties of the powders and SLS parameters of the printing of samples**

| | **E1** | **E2** | **E3** | **E4*** | **E5**** | **E6** | **E7** | **CE1** | **CE2** | **CE3** |
|---|---|---|---|---|---|---|---|---|---|---|
| **Monomer basis (PA)** | 616 | 1016 | 1016/ 10I | 6/66/ 610/ 616 | 6/66/ 610/ 616 | 620 | 1020 | 12 | 11 | 1010 |
| **Tₘ/°C** | 187-205 | 176-185 | 174-182 | 170-180 | 170-180 | 185-195 | 165-175 | 170-180 | 190-210 | 189-200 |
| **T_{rc} / °C** | 167 | 138 | 136 | 92 | 136 | 139 | 109 | 140 | 150 | 148 |
| **T_{g}/°C** | 40 | 30 | 30 | 30 | 28 | 33 | 27 | 40 | 37 | 36 |
| **Warm up duration/h** | 2 | 2 | 2 | 2 | 2 | 2 | 2 | 2 | 2.5 | 2 |
| **Part bed temperature / °C** | 178 | 175 | 171 | 163 | 162 | 175 | 164 | 169.5 | 187 | 187 |
| **Feed Temperature/ °C** | 147 | 137 | 132 | 100 | 80 | 130 | 90 | 136 | 135 | 147 |
| **Laser Parameter***** | 40, 9, 0.15' | 30, 3, 0.25" | 30, 3, 0.25" | 30, 3, 0.25" | 30, 3, 0.25" | 30, 3, 0.25" | 30, 3, 0.25" | 60, 20, 0.2" | 30, 3, 0.25" | 30, 3, 0.25" |
| **Flowability** | Excel lent | Excel lent | Excel lent | Excel lent | Excel lent | Excel lent | Excel lent | Good | Excel lent | Good |
| **Cracks Warpage Curling** | none slight none | none slight none | none none none | none none none | none none none | none slight none | none slight none | none slight none | slight slight slight | none significant slight |
| **Cool down (time) / h** | 16 | 16 | 16 | 16 | 16 | 16 | 16 | 12 | 12 | 16 |
| **Viscosity before print** | 1.95 | 1.63 | 1.66 | 1.71 | 1.71 | 1.90 | 1.87 | 1.62 | 1.94 | n.d |

| | | | | | | | | | | |
|---|---|---|---|---|---|---|---|---|---|---|
| *: milled; **: precipitated; ***: Fill Laser Power (W), Outline Laser Power (W), Slicer Fill Scan Spacing (mm); ': single scan; ": double scan; n.d.: not determined. All materials were measured after conditioning 40 h, 50% humidity, at 23 °C. If not indicated otherwise, the powders are milled powders. | | | | | | | | | | |

**Table 2: Monomer basis, mechanical properties of the printed examples**

| | **E1** | **E2** | **E3** | **E4*** | **E5**** | **E6** | **E7** | **CE1** | **CE2** | **CE3** |
|---|---|---|---|---|---|---|---|---|---|---|
| **Monomer basis (PA)** | 616 | 1016 | 1016/ 10I | 6/66/ 610/ 616 | 6/66/ 610/ 616 | 620 | 1020 | 12 | 11 | 1010 |
| **Tensile modulus (MPa)** | 1817 | 2103 | 1952 | 1779 | 1378 | - | - | 1788 | 1355 | 1748 |
| **Tensile strength (MPa)** | 48.4 | 55.2 | 49.4 | 46,8 | 38.6 | - | - | 47.7 | 42.8 | 49 |
| **Elongation at break (%)** | 20.2 | 18.3 | 20.8 | 23.5 | 16.7 | - | - | 6.5 | 18.6 | 17.9 |
| **Charpy impact strength (kJ/m²)** | 73.6 | n.d. | n.d. | n.d. | n.d. | - | - | 19.0 | 50.3 | 56.5 |
| **Part colour** | White | White | White | White | White | - | - | White | White | Whit e-Yello w |
| **Surface finish** | Smo oth | Smo oth | Smo oth | Smo oth-rough | Smo oth | - | - | Smo oth | Smo oth-rough | Roug h |
| **Total luminous transmittanc e** | 55.6 % | 55.2 % | 54.9 % | 54.7 % | 55.2 % | - | - | 42.7 % | 44.8 % | 47.9 % |

| | | | | | | | | | | |
|---|---|---|---|---|---|---|---|---|---|---|
| *: milled; **: precipitated; n.d.: not determined. All materials were measured after conditioning 40 h, 50% humidity, at 23 °C. If not indicated otherwise, the powders are milled powders. | | | | | | | | | | |

### Methods:

***Flowability*** was assessed visually by how filled the parts were after re-coating: Excellent: complete filling, Good: some parts had slight defects. Flowability means that a defect-free powder bed results from the insertion of the next powder layer, so that the powder does not clump, for example.

***Relative viscosity*** of the residual powder was measured in m-cresol at a temperature of 20 °C and a concentration of 0.5 wt.-% according to ISO 307.

***Tensile modulus*** was measured according to ISO 527 with a pulling speed of 1 mm/min ISO tension rod, standard: ISO/CD 3167, type A1, 170 × 20/10 × 4 mm at a temperature of 23 °C.

***Tensile strength*** and ***Elongation at break*** were measured according to ISO 527 with a tensile speed of 5 mm/min ISO tension rod, standard: ISO/CD 3167, type A1, 170 × 20/10. × 4 mm, temperature 23 °C

***Charpy Impact strength*** was measured according to ISO 179/*eA on ISO test bars according to standard: ISO/CD 3167, type B1, 80 × 10 × 4 mm at 23 °C.

***Surface quality,*** as well as ***Cracks, Warpage, Curling*** and ***Part colour*** were assessed visually. Cracks are cracks which develop in the powder bed that disturb the powder layering process, which can cause the underlying areas to be lasered several times. Such an occurrence can in the best case only yield cracks in the finished component, but more likely cracks can destroy the entire printing process through - over sintering, lump development, or part removal through a scraping effect. Curling refers to distortion of, for example, the edges of the component during the laser process, typically around the edges. Warpage, on the other hand, refers to distortion over the entire component, which usually occurs when the laser bed cools down, i.e. only after the laser has been applied.

***Total luminous transmittance*** was measured and evaluated according to ISO 13468-2:2021 on films with a layer thickness of 1.0 mm from 380 nm to 780 nm.

***Glass transition temperature (T_{g}), melting point (Tₘ), Recrystallization temperature (T_{rc}):*** ISO standard 11357-1, 11357-2, 11357-3 (2013); Powdered material; the differential scanning calorimetry (DSC) was carried out using a DSC 2920 instrument from TA Instruments with a heating rate of 10 K/min and a cooling rate of 5 K/min. The thermogram was analysed using the Universal Analysis 2000 program from TA Instruments.

The sample was quenched in dry ice after the first heating run for the purpose of determining the glass transition temperature. The glass transition temperature (T_{g}) was determined on the second heating run. The midpoint of the glass transition range, which was reported as the glass transition temperature (T_{g}), was ascertained by the "half-height" method.

For the recrystallization temperature (T_{rc}) the value taken during the cool-down phase of the first heating cycle is recorded.

### Recycling:

Polymer B3 was printed again with recycled powder (remainder of the bed powder), parts were divided, half were sent for analysis after conditioning, the other half were dyed with a Dyemansion DM60 machine. The results are summarized in Table 3.

**Table 3:**

| **Mechanical properties** | **PA1016/10I (5%) After conditioning** | **PA1016/10I (5%) After conditioning and Dyemansion post processing** |
|---|---|---|
| **Polymer according to:** | **B3** | **B3** |
| **Tensile modulus (MPa)** | 1980 | 1939 |
| **Tensile strength (MPa)** | 51.3 | 52.2 |
| **Elongation at break (%)** | 17.1 | 17.4 |

### Discussion of the results:

As one can see from the evidence in the tables, the new powders allow for the production of parts with a significantly higher translucency than the materials according to the prior art. Furthermore, superior mechanical properties can be achieved. At the same time better or at least equal flowability, printing properties (cracks/warpage/curling) are made available. Also remaining powder from the bath can be used in further processes, so there is less waste material than if prior art material is used, where typically the remaining powder in the bath has to be discarded after use.

In addition, it should be noted that the mechanical values are for conditioned (40 h, 50% humidity, at 23 °C) parts which retain the good mechanical properties. The possible colouring of the parts with the Dyemansion DM60 has a similar influence as the conditioning. In this Dyemansion DM60 proccess, the parts are coloured for 2.5h at 115 °C under pressure in a bath. An advantage of the printed parts is the increased transmission which also allows a better dyeing. The trial with the Dyemansion DM60 shows that the powder can be recycled and also that the dyeing process does not have an influence on the mechanical properties.

## Claims

1. Use of a powder in a layer-by-layer process in which areas of a powdered layer are selectively melted, sintered, fused, or solidified, preferably by focused or non-focused input of electromagnetic energy,
wherein the powder comprises or consists of a thermoplastic polyamide powder comprising aliphatic dicarboxylic acid building blocks with 16-22 carbon atoms.

2. Use according to claim 1, wherein the aliphatic dicarboxylic acid building blocks with 16-22 carbon atoms are selected from the group of linear dicarboxylic acids with terminal carboxylic groups, preferably consisting of: hexadecanedioic acid, octadecanedioic acid, docosane-1,20-dicarboxylic acid, or a mixture thereof, wherein preferably the aliphatic dicarboxylic acid building blocks with 16-22 carbon atoms is exclusively selected from only one of hexadecanedioic acid, octadecanedioic acid, or docosane-1,20-dicarboxylic acid.

3. Use according to any of the preceding claims, wherein the thermoplastic polyamide powder comprises or consists of building blocks built from diamines and dicarboxylic acids, and wherein the molar proportion of said aliphatic dicarboxylic acid building blocks with 16-22 carbon atoms relative to all dicarboxylic acids of the polyamide is at least 20%, or at least 40%, or at least 50%, preferably at least 60% or in the range of 65-100% or in the range of 85-100%.

4. Use according to claim 3, wherein said diamines are selected from the group consisting of linear or branched aliphatic, cycloaliphatic or aromatic diamines with 4-20 carbon atoms preferably linear aliphatic diamines with 6-12 carbon atoms, and wherein linear aliphatic diamines are preferably selected from the group of tetramethylenediamine, hexamethylenediamine, octamethylenediamine, nonamethylenediamine, decamethylenediamine or mixtures thereof and/or wherein cycloaliphatic diamines are preferably selected from the group consisting of MACM, PACM or mixtures thereof, and/or wherein aromatic diamines are preferably selected from p-xylylenediamine, m-xylylenediamine or mixtures thereof.

5. Use according to any of the preceding claims 3-4, wherein dicarboxylic acids different from said aliphatic dicarboxylic acid building blocks with 16-22 carbon atoms are selected from the group of linear or branched aliphatic, cycloaliphatic or aromatic dicarboxylic acids with 4-20 carbon atoms, wherein preferably linear aliphatic dicarboxylic acids are selected from succinic acid, adipic acid, suberic acid, sebacic acid, dodecanoic acid or mixtures thereof, and wherein aromatic dicarboxylic acids are selected from the group consisting of terephthalic acid, isophthalic acid or mixtures thereof.

6. Use according to any of the preceding claims, wherein the thermoplastic polyamide powder comprises or consists of building blocks built from diamines and said aliphatic dicarboxylic acid building blocks with 16-22 carbon atoms selected from the group consisting of PA 616, PA 618, PA 620, PA1016, PA 1018, PA 1020, PA1216, PA 1218, PA 1220, or mixtures thereof.

7. Use according to any of the preceding claims, wherein the thermoplastic polyamide powder is free from lactam building blocks,
or wherein the thermoplastic polyamide powder further comprises lactam building blocks, wherein the lactam building blocks have 4-20 carbon atoms, preferably 6-12 carbon atoms,
or wherein the thermoplastic polyamide powder further comprises lactam building blocks, and wherein the molar proportion of the lactam building blocks relative to building blocks built from diamines and dicarboxylic acids, is at most 50%, or at most 40%, or at most 30%, or at most 20%.

8. Use according to any of the preceding claims, wherein the thermoplastic polyamide powder is selected from the group consisting of PA 616, PA 1016, PA 1016/10I, PA 6/66/610/616, PA 620, PA 1020, or a mixture thereof.

9. Use according to any of the preceding claims, wherein the thermoplastic polyamide powder
has a melting point, measured in accordance with ISO 11357, of greater than 160 °C, preferably in the range of 165-210 °C,
and/or has a glass transition temperature, measured preferably by dynamic mechanical analysis in accordance with ISO 6721-2:2008 of at least 25 °C,
and/or is a ground or participated polyamide powder, and wherein preferably in case of a ground powder it is prepared by a cryogrinding process,
and/or has a relative viscosity, preferably measured in m-cresol at a temperature of 20 °C and a concentration of 0.5 wt .-% according to ISO 307, in the range of 1.5-2.1, preferably in the range of 1.6-2.0,
and/or has a recrystallization temperature (T_{rc}) in the range of 70-180° C, preferably in the range of 80-170 °C, or in the range of 80-160 °C, or in the range of 80-150 °C, or less than 148 °C or less than 145 °C,
and/or has a sinter window in the range of 5-90 °C, preferably in the range of 6-80 °C.

10. Use according to any of the preceding claims, wherein the powder and/or the thermoplastic polyamide powder has an average particle size D50, preferably measured according to ISO 13322-2, in the range of 50-80 µm, preferably in the range of 50-65 µm, more preferably in the range of 50-60 µm,
and/or wherein the thermoplastic, ground polyamide powder has an MFR value, preferably measured according to ISO 1133, in the range of 6-17 g / 10min.

11. Use according to any one of the preceding claims, wherein the thermoplastic polyamide powder is free from fillers and/or free from flame retardant additives and/or does not comprise aromatic building blocks,
or wherein the thermoplastic polyamide powder consists of the polyamide and further additives in an amount of not more than 20 weight% or 15 weight%, preferably in the range of 1-12 weight% or 5-10 weight%, relative to the total weight of the powder, and wherein preferably the additive is one or a combination of the following; fillers, preferably selected from the group of talc, aluminium oxide-based fillers, glass fillers, metal carbonates including calcium carbonate; flow agents, preferably selected from the group of fumed or precipitated silica, metal salts of long-chain fatty acids, including metal stearates, titanium dioxide, group 1 salts, fumed aluminium oxide; flame retardants, preferably selected from the group of organic or inorganic mono- or diphosphinates, preferably metal alkyl phosphinate, in particular aluminium diethyl phosphinate, alone or in combination with synergist compounds, preferably containing nitrogen and/or phosphorous, including melem, melam, melon or other melamine or derivatives thereof.

12. A method for preparing a thermoplastic polyamide powder for a use according to any of the preceding claims, wherein the thermoplastic polyamide is subjected to a cryo-grinding process or a precipitation process and is subsequently subjected to a particle size filtering process, preferably for the generation of a particle size distribution such that the average particle size D50, preferably measured according to ISO 13322-2, is in the range of 50-80 µm, preferably in the range of 50-65 µm, more preferably in the range of 50-60 µm.

13. A method of printing a three-dimensional article comprising the steps:
providing a powder as used in any of claims 1 to 11; and
selectively solidifying layers of the powder to form the article, preferably using focused or non-focused input of electromagnetic energy, wherein preferably the powder is provided in a layer-by-layer process
wherein preferably the powder has a particle diameter D50 measured according to ISO 13322-2 of 50-80 µm, preferably 50-65 µm, more preferably 50-60 µm.

14. An article prepared using a method as defined in claim 13.

15. Powder for the production of mouldings in a in a layer-by-layer process in which areas of a powdered layer are selectively melted, sintered, fused, or solidified, preferably by focused or non-focused input of electromagnetic energy,
wherein the powder comprises or consists of a thermoplastic polyamide powder comprising aliphatic dicarboxylic acid building blocks with 16-22 carbon atoms, wherein preferably the powder and/or the thermoplastic polyamide powder has a particle diameter D50 measured according to ISO 13322-2 of 50-80 µm, preferably 50-65 µm, more preferably 50-60 µm.
